# FASCICULE DE BREVET EUROPEEN

(11) **EP 4 441 403 B1**
(45) Date de publication et mention de la délivrance du brevet: **15.10.2025**
(21) Numéro de dépôt: 22822463.0
(22) Date de dépôt: 25.11.2022
(51) Int. Cl.: F16K 3/26, F16K 11/076, C21C 5/48, C21C 5/46, F16L 39/04, F16L 39/06

(54) **JOINT TOURNANT POUR CIRCULATION FLUIDIQUE SÉQUENTIELLE**
DREHGELENK FÜR SEQUENTIELLEN FLÜSSIGKEITSUMLAUF
SWIVEL JOINT FOR SEQUENTIAL FLUID CIRCULATION

(30) Priorité: 03.12.2021 FR 2112958
(43) Date de publication de la demande: 09.10.2024
(73) Titulaire: Latty International, 91400 Orsay (FR)
(72) Inventeur: ADJEMOUT, Mohand, 91400 Orsay (FR); DOS SANTOS, Pedro, 91400 Orsay (FR); HUARD, Stéphane, 91400 Orsay (FR)
(74) Mandataire: Loyer & Abello
(86) Numéro de dépôt international: PCT/EP2022/083356
(87) Numéro de publication internationale: WO 2023/099358

(56) Documents cités:
- JP-A- 2014 169 769
- JP-A- S61 286 694
- JP-B2- 6 751 807
- KR-A- 20210 104 658
- US-A1- 2005 046 181
- US-A1- 2008 199 555
- US-A1- 2021 317 937

## Description

### Domaine technique

L'invention se rapporte à un joint tournant pour permettre la circulation séquentielle de fluides entre les conduites d'un premier élément et les conduites d'un second élément, le premier élément et le second élément étant animés d'un mouvement de rotation l'un par rapport à l'autre.

L'invention se rapporte également à des dispositifs à circulation fluidique séquentielle comprenant de tels joints tournants.

### Arrière-plan technologique

On connaît de l'état de la technique de nombreux exemples de joints ou raccords tournants permettant de raccorder les conduites d'un premier élément avec les conduites d'un second élément, lorsque le premier élément et le second élément sont animés d'un mouvement de rotation l'un par rapport à l'autre. La circulation continue de fluides entre une conduite du premier élément et les conduites du deuxième élément s'opère alors par l'intermédiaire de circuits fluidiques internes au joint tournant. L'étanchéité entre les différents circuits est généralement réalisée par l'utilisation de dispositifs d'étanchéité à joints frottants ou à garnitures mécaniques.

De tels joints tournants sont utilisés dans de nombreux secteurs industriels, tels l'aéronautique, l'automobile, la papeterie ou encore l'agroalimentaire.

Le document EP0070791 décrit un joint tournant à raccords multiples servant à amener des fluides à des récipients d'affinage de fonte en cornue basculant autour de tourillons latéraux. Un autre type de joint tournant est connu du document KR 2021 0104658 A.

Cependant, les joints tournants connus ne donnent pas entière satisfaction lorsqu'ils sont utilisés dans des dispositifs à circulation fluidique séquentielle, c'est-à-dire des dispositifs dans lesquels les conduites du second élément sont raccordés, par intermittence, à la conduite du premier élément.

En effet, les dispositifs d'étanchéité précités n'empêchent pas des fuites de fluide au sein d'un même circuit fluidique du joint tournant. Ce défaut d'étanchéité est à l'origine d'écoulements de fluide non désirés dans des conduites du second élément, ce qui peut se révéler préjudiciable pour les machines sur lesquelles de tels joints tournants sont installés.

### Résumé

Une idée à la base de l'invention est de proposer un joint tournant pour la circulation séquentielle de fluides résistant, simple de maintenance et présentant une bonne étanchéité.

Selon un mode de réalisation, l'invention fournit un joint tournant pour permettre une circulation séquentielle d'au moins un fluide entre au moins une conduite d'un premier élément et au moins deux conduites d'un second élément, le premier élément et le second élément étant animés d'un mouvement de rotation l'un par rapport à l'autre autour d'un axe longitudinal, le joint tournant comportant : un bâti solidaire du second élément, le bâti étant évidé selon l'axe longitudinal de sorte à présenter une paroi interne, la paroi interne étant munie d'au moins deux ouvertures, chaque ouverture débouchant sur l'une des conduite du second élément ; un arbre solidaire du premier élément et emmanché dans l'évidement du bâti selon l'axe longitudinal, l'arbre comportant un corps et une surface externe formée autour du corps, le corps étant traversé par au moins un canal de passage, le canal de passage présentant au moins deux extrémités, une première extrémité raccordée à la conduite du premier élément, et une deuxième extrémité débouchant sur la surface externe de l'arbre, la deuxième extrémité étant située dans un plan normal à l'axe longitudinal comprenant l'une des ouvertures du bâti, de sorte que le canal de passage permet la circulation séquentielle du fluide entre ladite conduite du premier élément et l'une des conduites du second élément ; une bague d'étanchéité solidaire du bâti comportant une portion cylindrique emmanchée dans l'évidement du bâti selon l'axe longitudinal et située entre le bâti et l'arbre, la portion cylindrique présentant une face externe tournée vers la paroi interne du bâti et comportant au moins deux orifices, chaque orifice coïncidant avec l'une des ouvertures de la paroi interne du bâti et des gorges réalisées sur la face externe, chaque gorge étant réalisée autour de l'un des orifices ; et des joints d'étanchéité, chaque joint d'étanchéité étant logé dans l'une des gorges. Selon l'invention, la bague d'étanchéité comporte une collerette radiale se développant en direction du bâti, la collerette radiale étant reliée à la portion cylindrique, la collerette radiale étant fixée au bâti de sorte que la bague d'étanchéité soit solidaire du bâti.

Avantageusement, le bâti est de forme tubulaire cylindrique, de préférence à section circulaire, évidé de part en part selon son axe de révolution, confondu avec l'axe longitudinal.

Avantageusement, le joint d'étanchéité est composé d'un matériau élastomère, notamment choisi en fonction de la température, de la pression et de la nature du fluide circulant.

Grâce à ces caractéristiques, le joint tournant présente une bonne étanchéité axiale, obtenue par frottement dynamique de la bague d'étanchéité avec la surface externe de l'arbre, ainsi qu'une bonne étanchéité annulaire, obtenue par compression locale des joints d'étanchéité dans les gorges réalisées autour des orifices de la bague d'étanchéité.

En outre, l'utilisation d'une telle bague d'étanchéité et de tels joints d'étanchéités permet de simplifier les opérations de maintenance en remplaçant, en cas d'usure, ladite bague d'étanchéité et lesdits joints d'étanchéité, sans avoir à remplacer le bâti ou l'arbre. La durée des phases de maintenance est réduite.

Selon des modes de réalisation, un tel joint tournant peut comporter une ou plusieurs des caractéristiques suivantes.

Avantageusement, la portion cylindrique se développe entre deux extrémités et la collerette radiale est reliée l'une des extrémités de la portion cylindrique.

Selon un mode de réalisation, la collerette radiale est fixée au bâti au moyen d'au moins un organe de fixation reliant la collerette radiale audit bâti.

Avantageusement, la collerette radiale est munie d'au moins d'une encoche traversante destinée à recevoir une portion d'un organe de fixation, de préférence un pion.

Grâce à ces caractéristiques, la bague d'étanchéité est bloquée en rotation par rapport au bâti ce qui permet de maintenir la coïncidence de chacun des orifices de la bague d'étanchéité avec une ouverture de la paroi interne du bâti.

En outre, la fixation de la bague d'étanchéité par un dispositif de fixation à pion et encoche permet, contrairement à un organe de fixation à vis ou à rivet, d'éviter l'exercice d'une pression locale au niveau de la collerette qui pourrait accélérer la dégradation de la bague d'étanchéité et, à terme, altérer l'étanchéité du joint tournant.

Selon un mode de réalisation, l'une des gorges entourant les orifices est circulaire, et le joint d'étanchéité logé dans ladite gorge est un joint d'étanchéité torique.

Selon un mode de réalisation, les orifices de la bague d'étanchéité et les ouvertures du bâti sont régulièrement répartis autour de l'axe longitudinal.

Selon un mode de réalisation, la bague d'étanchéité présente une face interne tournée vers la surface externe de l'arbre, et la surface externe de l'arbre est munie d'une couche de revêtement destinée à coopérer avec la face interne.

Selon un mode de réalisation, la couche de revêtement est composée d'au moins l'un des matériaux choisis parmi de l'oxyde de chrome et du carbure de chrome.

Selon un mode de réalisation, la couche de revêtement peut être réalisée en plusieurs parties réalisées dans des matériaux différents, par exemple une première partie en oxyde de chrome et une deuxième partie en carbure de chrome.

L'oxyde de chrome et le carbure de chrome sont des matériaux durs, permettant de résister aux frottements et notamment à l'abrasion de la face interne de la bague d'étanchéité sur la surface externe de l'arbre. La dégradation de la couche de revêtement est ainsi réduite dans le temps, ce qui augmente le temps de fonctionnement de la bague d'étanchéité entre deux phases de maintenance nécessaires pour remplacer ou recharger la couche de revêtement de surface.

Selon un mode de réalisation, le joint tournant comporte en outre au moins un palier interposé entre l'arbre et le boîtier pour guider le mouvement de rotation.

Un tel palier peut par exemple prendre la forme d'un palier à éléments roulants, tel un roulement à billes ou un roulement à rouleaux, ou d'un palier lisse antifriction, de préférence en bronze.

Un autre aspect de l'invention est de proposer des dispositifs à circulation fluidique séquentielle dont les cadences de fonctionnement sont augmentées, notamment en limitant le temps d'immobilisation du dispositif pour des phases de réglage ou de maintenance.

Selon un mode de réalisation, l'invention fournit un dispositif à circulation fluidique séquentielle comportant : un premier élément et un second élément, le premier élément étant fixe et muni d'au moins une conduite, le second élément étant monté mobile en rotation par rapport au premier élément autour d'un axe longitudinal et muni d'au moins deux conduites ; et un joint tournant selon l'un quelconque des modes de réalisation précités, le joint tournant étant configuré pour permettre une circulation séquentielle d'au moins un fluide entre la conduite du premier élément et l'une des conduites du second élément.

Selon un mode de réalisation, l'invention fournit un dispositif à circulation fluidique séquentielle comportant : un premier élément et un second élément, le second élément étant fixe et muni d'au moins deux conduites, le premier élément étant monté mobile en rotation par rapport au premier élément autour d'un axe longitudinal et muni d'au moins une conduite ; et un joint tournant selon l'un quelconque des modes de réalisation précités, le joint tournant étant configuré pour permettre une circulation séquentielle d'au moins un fluide entre la conduite du premier élément et l'une des conduites du second élément.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La [Fig.1] est une vue en perspective détaillée d'un joint tournant selon un mode de réalisation de l'invention.
[Fig.2] La [Fig.2] est une vue de côté d'un joint tournant tel qu'illustré sur la [Fig.1] selon un plan parallèle à l'axe longitudinal.
[Fig.3] La [Fig.3] est une vue en coupe longitudinale d'un joint tournant tel qu'illustré sur les figures 1 et 2.
[Fig.4] La [Fig.4] est une vue en perspective d'une bague d'étanchéité et de joints d'étanchéité d'un joint tournant tel qu'illustré sur les figures 1 à 3.
[Fig.5] La [Fig.5] est en coupe selon l'axe longitudinal d'une bague d'étanchéité telle qu'illustrée sur la [Fig.4].

### Description des modes de réalisation

Les modes de réalisation ci-après sont décrits en relation avec un joint tournant 1 permettant la circulation séquentielle de fluides entre les conduites d'un élément fixe et les conduites d'un élément mobile, animé d'un mouvement de rotation autour d'un axe longitudinal L. Les fluides circulants, liquides ou gazeux, peuvent être de différentes natures ou de différentes pressions.

Un tel joint tournant 1 est conçu pour être installé dans un dispositif à circulation fluidique séquentielle. Ce dispositif comporte un premier élément muni de conduites axiales aptes à projeter ou aspirer des fluides selon la direction de l'axe longitudinal *L*, et un second élément muni de rangées annulaires superposées de conduites radiales, régulièrement réparties autour de l'axe longitudinal *L* et aptes à projeter ou aspirer des fluides selon une direction radiale. Chaque rangée annulaire de conduites est comprise un plan transversal *T*ₐ*, T*_{b}*,* normal à l'axe longitudinal *L*. Le joint tournant, centré sur l'axe longitudinal *L*, raccorde au moins une conduite axiale du premier élément aux conduites radiales d'une même rangée annulaire du second élément, de sorte que, sous l'effet du mouvement de rotation, la circulation du fluide entre la conduite radiale et la conduite axiale à laquelle elle est raccordée, est séquencée.

Dans un mode de réalisation, le premier élément est fixe et le second élément est monté mobile en rotation par rapport au premier élément autour de l'axe longitudinal *L*

Dans un mode de réalisation, le second élément est fixe et le premier élément est monté mobile en rotation par rapport au second élément autour de l'axe longitudinal *L*.

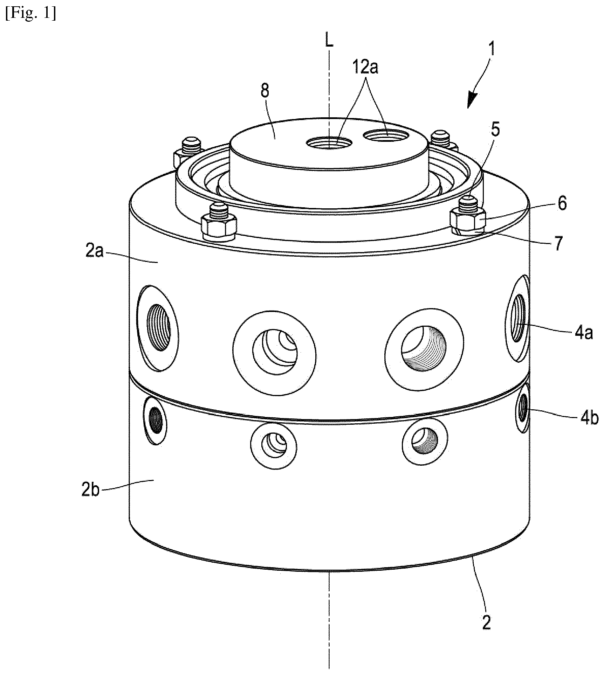

En référence aux figures 1 à 3, le joint tournant 1 comporte un bâti 2 destiné à être solidarisé au second élément, par exemple par des moyens de fixation *ad hoc* permettant une fixation amovible ou définitive.

Le bâti 2, de forme tubulaire cylindrique, est évidé de part en part selon son axe de révolution, l'axe de révolution coïncidant avec l'axe longitudinal *L*. L'évidement traversant, de forme cylindrique à section circulaire, définit une paroi interne 3 du bâti 2.

Le bâti 2 est muni d'ouvertures 4a, 4b radiales traversantes formées en rangées annulaires. Les ouvertures 4a, 4b radiales de chaque rangée annulaire sont régulièrement réparties autour de l'axe longitudinal *L* de sorte que chacune desdites ouvertures 4a, 4b peut être positionnée en regard d'une extrémité débouchante d'une conduite radiale du second élément. Les ouvertures 4a, 4b radiales peuvent être de même diamètre ou présenter des diamètres différents.

Sur le joint tournant 1 tel qu'illustré sur les figures 1 à 3, les deux rangées annulaires du bâti 2 comportent le même nombre d'ouvertures 4a, 4b radiales et sont agencées par superposition selon une configuration dans laquelle les ouvertures 4a, 4b radiales de chacune des deux rangées annulaires sont alignées selon la direction de l'axe longitudinal *L*.

En variante, d'autres configurations peuvent être envisagées. En particulier, le bâti 2 peut comporter plus de deux rangées annulaires. Les rangées annulaires peuvent différer les unes des autres par leur nombre d'ouvertures 4a, 4b radiales. De plus, les ouvertures 4a, 4b radiales d'une rangée annulaire peuvent ne pas être alignées selon la direction de l'axe longitudinal *L* avec les ouvertures 4a, 4b radiales des autres rangées annulaires.

Par commodité d'assemblage, le bâti 2 peut consister en un empilement axial d'éléments tubulaires 2a, 2b solidairement fixés entre eux, par exemple au moyen de tiges filetées 5 verticales bloquées en rotation par serrage d'écrous taraudés 6 contre des rondelles freins 7, par exemple des rondelles Grower. Chacun des éléments tubulaires 2a, 2b du bâti 2 peut comporter une ou plusieurs rangées annulaires d'ouvertures 4a, 4b radiales.

En référence aux [Fig.1] à 3, le joint tournant 1 comporte également un arbre 8 destiné à être solidarisé au premier élément, par exemple par des moyens de fixation *ad hoc* permettant une fixation amovible ou définitive.

L'arbre 8 comporte un corps 9 essentiellement cylindrique, centré autour de l'axe longitudinal *L*, et emmanché dans l'évidement du bâti 2. L'arbre 8 présente également une surface externe 10 formée autour du corps 9. Le corps 9 est traversé par des canaux de passage 11 se développant entre plusieurs extrémités 12a, 12b. Pour chaque canal de passage 11, une première extrémité 12a est raccordée à l'une des conduites axiales du premier élément. Les autres extrémités 12b débouchent sur la surface externe 10 de l'arbre 8 dans un plan transversal *Tₐ, T_{b}* comprenant l'une des rangées annulaires d'ouvertures 4a, 4b radiales du bâti 2.

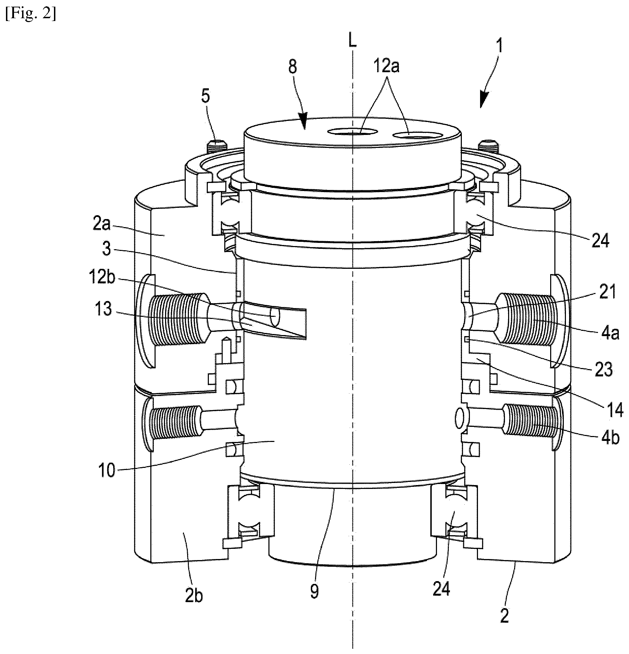

Plus précisément, en référence à la [Fig.2], des portions cylindriques de l'arbre 8 tronquées par des plans parallèles à l'axe longitudinal *L* définissent des chambres fluidiques 13. Les extrémités 12b d'un canal de passage 11 non directement raccordées à une conduite axiale du premier élément débouchent dans une chambre fluidique 13. Les chambres fluidiques 13 sont situées dans des plans transversaux *Tₐ, T_{b}* de sorte qu'au moins une ouverture 4a, 4b radiale du bâti 2 débouche sur la chambre fluidique 13.

Dans la suite de la description, l'ensemble résultant de la mise en communication d'un canal de passage 11, d'une chambre fluidique 13 et d'ouvertures 4a, 4b radiales du bâti 2 constitue un circuit fluidique du joint tournant 1.

En fonctionnement, le joint tournant 1 est monté sur un dispositif à circulation fluidique séquentielle. Le bâti 2 et l'arbre 8 sont alors animés, l'un par rapport l'autre, d'un mouvement de rotation autour de l'axe longitudinal *L*, de sorte que les ouvertures 4a, 4b radiales d'une même rangée annulaire débouchent, par intermittence, dans une chambre fluidique 13.

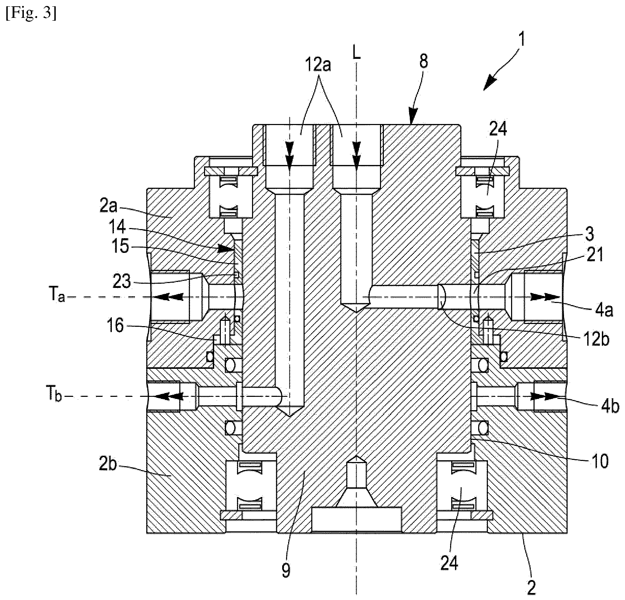

Autrement dit, chaque circuit fluidique permet le passage d'un fluide entre une conduite axiale du premier élément et une ou plusieurs conduites radiales du second élément. Sur la [Fig.3], le joint tournant 1 reçoit un flux de fluide depuis une conduite axiale du premier élément et alimenter séquentiellement des conduites radiales du second élément. En variante, le joint tournant 1 peut recevoir des flux distincts de fluides depuis plusieurs conduites radiales du second élément et alimenter séquentiellement une conduite axiale du premier élément.

Le joint tournant 1 comporte également au moins une bague d'étanchéité 14 située entre le bâti 2 et l'arbre 8 pour contribuer, par frottement dynamique avec la surface externe 10 de l'arbre 8, à empêcher les écoulements de fluide axiaux, ce qui assure l'étanchéité entre les différents circuits fluidiques.

Avantageusement, la bague d'étanchéité 14 est une pièce monobloc découpée dans une résine thermoplastique, de préférence une résine fluorocarbonée, par exemple du polytétrafluoroéthylène (PTFE).

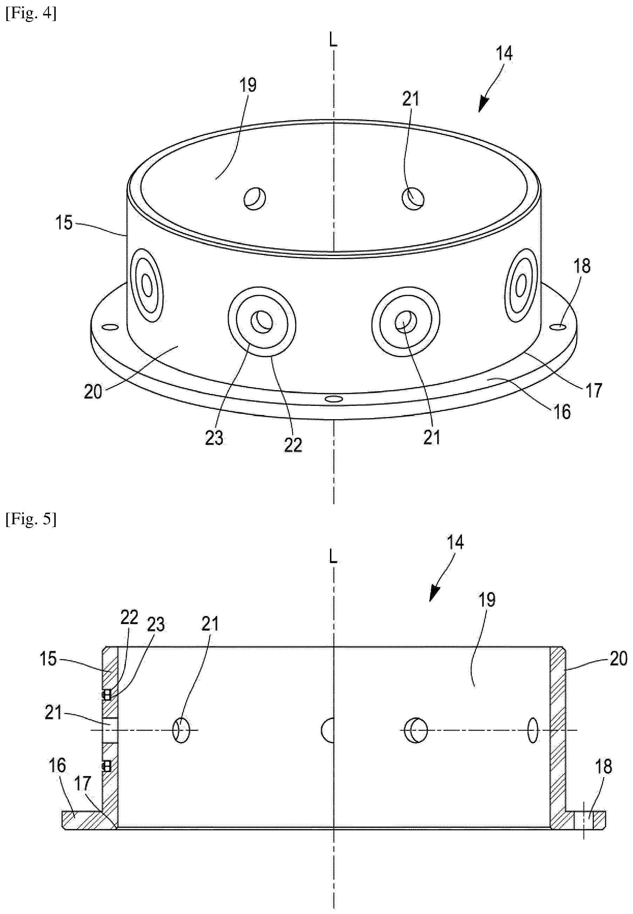

En référence aux figures 4 et 5, la bague d'étanchéité 14 comporte une portion cylindrique 15 à section circulaire, emmanchée dans l'évidement du bâti 2, et d'une collerette radiale 16 se développant en direction du bâti 2. La collerette radiale 16 est reliée à la portion cylindrique 15 par l'une de ses extrémités 17 circulaires, et comporte plusieurs encoches 18. Chaque encoche étant destinée à recevoir l'extrémité d'un pion (non représenté) emmanché en force dans un trou du bâti 2 pour fixer solidairement la bague d'étanchéité 14 au bâti 2.

La portion cylindrique 15 de la bague d'étanchéité 14 présente une face interne 19 tournée vers la surface externe 10 de l'arbre 8 et une face externe 20 tournée vers la paroi interne 3 du bâti 2. Des orifices 21, répartis en couronne autour de l'axe longitudinal *L*, traversent de part en part la portion cylindrique 15.

En référence à la [Fig.3], la bague d'étanchéité 14 est montée dans un épaulement annulaire situé dans la paroi interne 3 du bâti 2 de sorte que chaque orifice 21 est positionné en regard d'une ouverture 4a, 4b radiale du bâti 2.

La face externe 20 de la portion cylindrique 15 comporte également des gorges 22, par exemple circulaires, réalisées autour des orifices 21 et destinées à recevoir des joints d'étanchéité 23 ci-après décrit.

Pour contribuer à garantir l'étanchéité axiale du joint tournant 1, la surface externe 10 de l'arbre 8 est munie d'une couche de revêtement destinée à coopérer avec la face interne 19 de la portion cylindrique 15 de la bague d'étanchéité 14. Avantageusement, la couche de revêtement est composée d'oxyde de chrome ou de carbure de chrome.

Le joint tournant 1 comporte également des joints d'étanchéité 23, par exemple toriques, logés dans les gorges 22 de la face externe 19 de la portion cylindrique 15 pour contribuer à empêcher des écoulements de fluide annulaires et assurer l'étanchéité au sein d'un même circuit fluidique. Après fixation de la bague d'étanchéité 14 sur le bâti 2, les joints d'étanchéité 23 sont comprimés entre la paroi interne 3 du bâti 2 et le fond de des gorges 22 de la face externe 19 de la portion cylindrique 15 de sorte à réaliser l'étanchéité entre une ouverture 4a, 4b radiale du bâti 2 et un orifice 21 de la bague d'étanchéité 14. Avantageusement, les joints d'étanchéité 23 sont composés d'un matériau élastomère, par exemple des joints Viton^{®} en fluoroélastomère.

En référence à la [Fig.3], le joint tournant 1 comporte également des paliers 24 pour guider le mouvement de rotation. Les paliers 24 sont de préférence des roulements à billes étanches, montés entre un épaulement annulaire de la surface externe 10 de l'arbre 8 et un épaulement annulaire de la paroi interne 3 du bâti 2.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Joint tournant (1) pour permettre une circulation séquentielle d'au moins un fluide entre au moins une conduite d'un premier élément et au moins deux conduites d'un second élément, le premier élément et le second élément étant animés d'un mouvement de rotation l'un par rapport à l'autre autour d'un axe longitudinal (*L*), le joint tournant comportant :
- un bâti (2) solidaire du second élément, le bâti (2) étant évidé selon l'axe longitudinal (*L*) de sorte à présenter une paroi interne (3), la paroi interne (3) étant munie d'au moins deux ouvertures (4a, 4b), chaque ouverture (4a, 4b) débouchant sur l'une des conduite du second élément ;
- un arbre (8) solidaire du premier élément et emmanché dans l'évidement du bâti (2) selon l'axe longitudinal (L), l'arbre (8) comportant un corps (9) et une surface externe (10) formée autour du corps (9), le corps (9) étant traversé par au moins un canal de passage (11), le canal de passage (11) présentant au moins deux extrémités (12a, 12b), une première extrémité (12a) raccordée à la conduite du premier élément, et une deuxième extrémité (12b) débouchant sur la surface externe (10) de l'arbre (8), la deuxième extrémité (12b) étant située dans un plan (*T*ₐ, *T*_{b}) normal à l'axe longitudinal (*L*) comprenant l'une des ouvertures (4a, 4b) du bâti (2), de sorte que le canal de passage (11) permet la circulation séquentielle du fluide entre ladite conduite du premier élément et l'une des conduites du second élément ;
- une bague d'étanchéité (14) solidaire du bâti (2) comportant une portion cylindrique (15) emmanchée dans l'évidement du bâti (2) selon l'axe longitudinal (L) et située entre le bâti (2) et l'arbre (8), la portion cylindrique (15) présentant une face externe (20) tournée vers la paroi interne (3) du bâti (2) et comportant au moins deux orifices (21), chaque orifice (21) coïncidant avec l'une des ouvertures (4a, 4b) de la paroi interne (3) du bâti (2), et des gorges (22) réalisées sur la face externe (20), chaque gorge (22) étant réalisée autour de l'un des orifices (21) ; et
- des joints d'étanchéité (23), chaque joint d'étanchéité (23) étant logé dans l'une des gorges (22) ;
**caractérisé en ce que** la bague d'étanchéité (14) comporte une collerette radiale (16) se développant en direction du bâti (2), la collerette radiale (16) étant reliée à la portion cylindrique (15), la collerette radiale (16) étant fixée au bâti (2) de sorte que la bague d'étanchéité (14) soit solidaire du bâti (2).

2. Joint tournant (1) selon la revendication précédente, dans lequel la collerette radiale (16) est fixée au bâti (2) au moyen d'au moins un organe de fixation reliant la collerette radiale (16) audit bâti (2).

3. Joint tournant (1) selon l'une quelconque des revendications précédentes, dans lequel l'une des gorges (22) entourant les orifices (21) est circulaire, et le joint d'étanchéité (23) logé dans ladite gorge (22) est un joint d'étanchéité torique.

4. Joint tournant (1) selon l'une quelconque des revendications précédentes, dans lequel les orifices (21) de la bague d'étanchéité (14) et les ouvertures (4a, 4b) du bâti (2) sont régulièrement répartis autour de l'axe longitudinal (*L*).

5. Joint tournant (1) selon l'une quelconque des revendications précédentes, dans lequel la bague d'étanchéité (14) présente une face interne (19) tournée vers la surface externe (10) de l'arbre (8), et dans lequel la surface externe (10) de l'arbre (8) est munie d'une couche de revêtement destinée à coopérer avec la face interne (19) de la bague d'étanchéité (14).

6. Joint tournant (1) selon la revendication 5, dans lequel la couche de revêtement est composée d'au moins l'un des matériaux choisis parmi :
- de l'oxyde de chrome ; et
- du carbure de chrome.

7. Joint tournant (1) selon l'une quelconque des revendications précédentes, comportant en outre au moins un palier (24) interposé entre l'arbre (8) et le boîtier (2) pour guider le mouvement de rotation.

8. Dispositif à circulation fluidique séquentielle comportant :
- un premier élément et un second élément, le premier élément étant fixe et muni d'au moins une conduite, le second élément étant monté mobile en rotation par rapport au premier élément autour d'un axe longitudinal et muni d'au moins deux conduites ; et
- un joint tournant (1) selon l'une quelconque des revendications précédentes, le joint tournant (1) étant configuré pour permettre une circulation séquentielle d'au moins un fluide entre la conduite du premier élément et l'une des conduites du second élément.

9. Dispositif à circulation fluidique séquentielle comportant :
- un premier élément et un second élément, le second élément étant fixe et muni d'au moins deux conduites, le premier élément étant monté mobile en rotation par rapport au premier élément autour d'un axe longitudinal et muni d'au moins une conduite ; et
- un joint tournant (1) selon l'une des revendications 1 à 7, le joint tournant (1) étant configuré pour permettre une circulation séquentielle d'au moins un fluide entre la conduite du premier élément et l'une des conduites du second élément.

## Patentansprüche

1. Drehgelenk (1) zum Ermöglichen einer sequenziellen Zirkulation mindestens eines Fluids zwischen mindestens einer Leitung eines ersten Elements und mindestens zwei Leitungen eines zweiten Elements, wobei das erste Element und das zweite Element relativ zueinander um eine Längsachse (L) bewegbar sind, wobei das Drehgelenk umfasst:
- ein mit dem zweiten Element fest verbundenes Gehäuse (2), wobei das Gehäuse (2) entlang der Längsachse (L) derart ausgespart ist, dass es eine Innenwand (3) aufweist, wobei die Innenwand (3) mit mindestens zwei Öffnungen (4a, 4b) versehen ist, wobei jede Öffnung (4a, 4b) in eine der Leitungen des zweiten Elements mündet;
- eine Welle (8), die fest mit dem ersten Element verbunden und entlang der Längsachse (*L*) in die Ausnehmung des Gehäuses (2) eingepresst ist, wobei die Welle (8) einen Körper (9) und eine um den Körper (9) herum ausgebildete Außenfläche (10) aufweist, wobei der Körper (9) von mindestens einem Durchgangskanal (11) durchquert ist, wobei der Durchgangskanal (11) mindestens zwei Enden (12a, 12b) aufweist, wobei ein erstes Ende (12a) mit der Leitung des ersten Elements verbunden ist und ein zweites Ende (12b) in die Außenfläche (10) der Welle (8) mündet, wobei das zweite Ende (12b) in einer Ebene (*T*ₐ, *T*_{b}) senkrecht zur Längsachse (*L*) liegt, die eine der Öffnungen (4a, 4b) des Gehäuses (2) enthält, so dass der Durchgangskanal (11) die sequenzielle Zirkulation des Fluids zwischen der Leitung des ersten Elements und einer der Leitungen des zweiten Elements ermöglicht;
- einen mit dem Gehäuse (2) fest verbundenen Dichtungsring (14) mit einem zylindrischen Abschnitt (15), der in die Ausnehmung des Gehäuses (2) entlang der Längsachse (*L*) eingepresst ist und sich zwischen dem Gehäuse (2) und der Welle (8) befindet, wobei der zylindrische Abschnitt (15) eine zur Innenwand (3) des Gehäuses (2) gerichtete Außenfläche (20) aufweist und mindestens zwei Öffnungen (21) umfasst, wobei jede Öffnung (21) mit einer der Öffnungen (4a, 4b) der Innenwand (3) des Gehäuses (2) übereinstimmt, und wobei an der Außenfläche (20) Nuten (22) ausgebildet sind, wobei jede Nut (22) um eine der Öffnungen (21) herum ausgebildet ist; und
- Dichtungen (23), wobei jede Dichtung (23) in einer der Nuten (22) aufgenommen ist;
**dadurch gekennzeichnet, dass**
der Dichtungsring (14) einen radialen Flansch (16) aufweist, der sich in Richtung des Gehäuses (2) erstreckt, wobei der radiale Flansch (16) mit dem zylindrischen Abschnitt (15) verbunden ist und der radiale Flansch (16) so am Gehäuse (2) befestigt ist, dass der Dichtungsring (14) fest mit dem Gehäuse (2) verbunden ist.

2. Drehgelenk (1) nach dem vorangehenden Anspruch, wobei der radiale Flansch (16) mittels zumindest eines Befestigungselements, das den radialen Flansch (16) mit dem Gehäuse (2) verbindet, am Gehäuse (2) befestigt ist.

3. Drehgelenk (1) nach einem der vorangehenden Ansprüche, wobei eine der die Öffnungen (21) umgebenden Nuten (22) kreisförmig ist und die in dieser Nut (22) angeordnete Dichtung (23) eine O-Ring-Dichtung ist.

4. Drehgelenk (1) nach einem der vorangehenden Ansprüche, wobei die Öffnungen (21) des Dichtrings (14) und die Öffnungen (4a, 4b) des Gehäuses (2) gleichmäßig um die Längsachse (*L*) verteilt sind.

5. Drehgelenk (1) nach einem der vorangehenden Ansprüche, wobei der Dichtungsring (14) eine Innenfläche (19) aufweist, die zur Außenfläche (10) der Welle (8) weist, und wobei die Außenfläche (10) der Welle (8) mit einer Beschichtung versehen ist, die mit der Innenseite (19) des Dichtungsrings (14) zusammenwirkt.

6. Drehgelenk (1) nach Anspruch 5, wobei die Beschichtungsschicht aus mindestens einem der folgenden Materialien besteht:
- Chromoxid; und
- Chromcarbid.

7. Drehgelenk (1) nach einem der vorangehenden Ansprüche, das ferner mindestens ein Lager (24) aufweist, das zwischen der Welle (8) und dem Gehäuse (2) angeordnet ist, um die Drehbewegung zu führen.

8. Vorrichtung mit sequenzieller Fluidzirkulation, umfassend:
- ein erstes Element und ein zweites Element, wobei das erste Element feststehend und mit mindestens einer Leitung versehen ist, das zweite Element relativ zum ersten Element um eine Längsachse drehbar gelagert und mit mindestens zwei Leitungen versehen ist; und
- ein Drehgelenk (1) gemäß einem der vorangehenden Ansprüche, wobei das Drehgelenk (1) derart ausgebildet ist, dass es eine sequentielle Zirkulation mindestens eines Fluids zwischen der Leitung des ersten Elements und einer der Leitungen des zweiten Elements ermöglicht.

9. Vorrichtung mit sequenzieller Fluidzirkulation, umfassend:
- ein erstes Element und ein zweites Element, wobei das zweite Element feststehend und mit mindestens zwei Leitungen versehen ist und wobei das erste Element relativ zum ersten Element um eine Längsachse drehbar gelagert und mit mindestens einer Leitung versehen ist;
und
- ein Drehgelenk (1) gemäß einem der Ansprüche 1 bis 7, wobei das Drehgelenk (1) derart ausgebildet ist, dass es eine sequentielle Zirkulation mindestens eines Fluids zwischen der Leitung des ersten Elements und einer der Leitungen des zweiten Elements ermöglicht.

## Claims

1. Rotary seal (1) to enable a sequential circulation of at least one fluid between at least one conduit of a first element and at least two conduits of a second element, the first element and the second element being driven by a rotary movement against one another about a longitudinal axis (L), the rotary seal comprising:
- a frame (2) integral with the second element, the frame (2) being recessed about the longitudinal axis (L), so as to have an internal wall (3), the internal wall (3) being provided with at least two openings (4a, 4b), each opening (4b, 4b), opening onto one of the conduits of the second element;
- a shaft (8) integral with the first element and sleeved in the recess of the frame (2) about the longitudinal axis (L), the shaft (8) comprising a body (9) and an external surface (10) formed around the body (9), the body (9) being passed through at least one passage channel (11), the passage channel (11) having at least two ends (12a, 12b), a first end (12a) connected to the conduit of the first element, and a second end (12b) opening onto the external surface (10) of the shaft (8), the second end (12b) being located in a plane (*T*ₐ, *T*_{b}) normal to the longitudinal axis (L) comprising one of the openings (4a, 4b) of the frame (2), such that the passage channel (11) enables the sequential circulation of the fluid between said conduit of the first element and one of the conduits of the second element;
- a sealing ring (14) integral with the frame (2) comprising a cylindrical portion (15) sleeved in the recess of the frame (2) about the longitudinal axis (L) and located between the frame (2) and the shaft (8), the cylindrical portion (15) having an external face (20) rotated towards the internal wall (3) of the frame (2) and comprising at least two orifices (21), each orifice (21) coinciding with one of the openings (4a, 4b) of the internal wall (3) of the frame (2), and grooves (22) made on the external face (20), each groove (22) being made around one of the orifices (21); and
- seals (23), each seal (23) being housed in one of the grooves (22);
**characterised in that** the sealing ring (14) comprises a radial collar (16) developing in the direction of the frame (2), the radial collar (16) being connected to the cylindrical portion (15), the radial collar (16) being fixed to the frame (2), such that the sealing ring (14) is integral with the frame (2).

2. Rotary seal (1) according to the preceding claim, wherein the radial collar (16) is fixed to the frame (2) by means of at least one fixing member connecting the radial collar (16) to said frame (2).

3. Rotary seal (1) according to any one of the preceding claims, wherein one of the grooves (22) surrounding the orifices (21) is circular, and the seal (23) housed in said groove (22) is an O-ring.

4. Rotary seal (1) according to any one of the preceding claims, wherein the orifices (21) of the sealing ring (14) and the openings (4a, 4b) of the frame (2) are regularly distributed about the longitudinal axis (L).

5. Rotary seal (1) according to any one of the preceding claims, wherein the sealing ring (14) has an internal face (19) rotated towards the external surface (10) of the shaft (8), and wherein the external surface (10) of the shaft (8) is provided with a coating layer intended to engage with the internal face (19) of the sealing ring (14).

6. Rotary seal (1) according to claim 5, wherein the coating layer is composed of at least one of the materials chosen from among:
- chromium oxide; and
- chromium carbide.

7. Rotary seal (1) according to any one of the preceding claims, further comprising at least one bearing (24) interposed between the shaft (8) and the casing (2) to guide the rotary movement.

8. Sequential fluid circulation device comprising:
- a first element and a second element, the first element being fixed and provided with at least one conduit, the second element being movably rotatably mounted with respect to the first element about a longitudinal axis and provided with at least two conduits; and
- a rotary seal (1) according to any one of the preceding claims, the rotary seal (1) being configured to enable a sequential circulation of at least one fluid between the conduit of the first element and one of the conduits of the second element.

9. Sequential fluid circulation device comprising:
- a first element and a second element, the second element being fixed and provided with at least two conduits, the first element being movably rotatably mounted with respect to the first element about a longitudinal axis and provided with at least one conduit; and
- a rotary seal (1) according to any one of claims 1 to 7, the rotary seal (1) being configured to enable a sequential circulation of at least one fluid between the conduit of the first element and one of the conduits of the second element.
